# EUROPEAN PATENT APPLICATION

(11) **EP 4 064 699 A1**
(43) Date of publication of application: **28.09.2022**
(21) Application number: 22162134.5
(22) Date of filing: 15.03.2022
(51) Int. Cl.: H04N 13/398, H04N 13/332, H04N 13/366, G02B 27/01, H04N 13/117, G02B 27/00, G06F 3/01, G09G 5/12

(54) **METHOD AND SYSTEM FOR REDUCING MOTION-TO-PHOTON LATENCY IN HEAD-MOUNTED DISPLAY SYSTEM**

(30) Priority: 26.03.2021 US 202117213724
(71) Applicant: Lightspace Technologies, SIA, 2167 Marupe (LV)
(72) Inventor: Osmanis, Ilmars, Marupes novads (LV); Zabels, Roberts, Riga (LV); Osmanis, Kriss, Babites novads (LV); Gotlaufs, Roberts, Madonas novads (LV); Greitans, Marcis, Garkalnes Novads (LV); Slics, Kristians, Livanu novads (LV); Linina, Elza, Riga (LV)
(74) Representative: Aaltonen, Janne Lari Antero

(57) **Abstract**

Disclosed is a head-mounted display system (100, 200, 300) for reducing motion-to-photon latency. The head-mounted display system comprises a head-mounted display apparatus (102) comprising a display driver (202) to drive an image on a display (204), a tracking system (206) to obtain a pose data, a communication interface (106) to form communication between the head-mounted display apparatus and a remote rendering unit (104), and a display processor (208 configured to collect a first pose data at a first moment of time and a second pose data at a second moment of time and provide the collected pose data to the remote rendering unit, collect a third pose data at a third moment of time, receive a second initial image from a remote rendering unit, use the third pose data to form a second first initial image from the second initial image and receive V-sync signal from the display driver and thereafter provide the second initial image to the display driver.

## Description

### TECHNICAL FIELD

The present disclosure relates to head-mounted display systems, and more specifically to systems and methods for reducing motion-to-photon latency in a multi-focal head-mounted display system.

### BACKGROUND

Representation of three-dimensional images to the eyes of a viewer is a challenging task. One of the solutions is application of stereoscopic head-mounted displays. Furthermore, such displays can be implemented as see-through displays and used for augmentation of reality thus altering the human perception, boosting cognition and decision making. Nevertheless, typically such systems are ill-suited for near-work - manual tasks which actively involve human participation - such as assembly and repair, medical procedures, design tasks and similar. This is because known stereoscopic display systems utilize single display plane which in order to observe a sharp image - forces the human eye to accommodate at this distance, while binocular vergence cues provide a sense of 3D depth. This situation is causing a forceful decoupling of naturally coupled mechanisms of vergence and accommodation which manifest as blurred vision when accommodating at close distances as well as excessive eye-strain and overall exhaustion of human visual system.

One of the known solutions to overcome these limitations is application of multi-focal display architecture which substantially can mitigate adverse effects typically encountered in single focal-plane systems. Nevertheless, for convenience of users, preferably such systems have to have low weight and no wired connections during use not to limit freedom of movement. As multi-focal 3D image datasets can become large, wireless data transmission and creation of seamless user experience in augmented reality environment becomes challenging.

The existing solutions can be divided into two groups. One group are inventions of optical or display architectures addressing vergence-accommodation conflict while the other group are systems of convenience and performance. In the group of alternative display technologies, there are varifocal displays. For example, Magic Leap One^{™} is a varifocal display system utilizing two discrete focal planes. While mitigating severity of vergence-accommodation conflict, the developed system relies on eye-tracking as an information source for deciding when to switch focal planes. On one hand, the eye-tracking complicates the system and can introduce processing delays, while on the other hand toggling between two discrete image planes can cause noticeable image artifacts during abrupt transition thus degrading image quality. Alternative methods include light-field displays, which have demonstrated ability to convey monocular focus cues thus overcoming limitations imposed by vergence-accommodation conflict attributed to single focal plane systems.

The other group of inventions considers convenient and performance-based design of head-mounted displays and smart glasses. For example, already mentioned Magic Leap One^{™} system for freedom of movement and light-weight head mounted display part have chosen to couple the display with a computational pack. Thus, battery and computational resources are separate from the head-mounted display, nevertheless, system still can be considered mobile. Advantage is a reduced mass on the head and possibly larger operational time due to ability to incorporate a battery with larger capacity. Nevertheless, a computational pack is wired to the head-mounted display system and locally interferes with the mobility of a user. Similarly, the placement of computational pack on a side or back might interfere with movement.

An alternative solution for convenient and mobile head-mounted display platform has been offered by Microsoft HoloLens products. These are stand-alone systems with computational resources and battery directly incorporated within the head-mounted display itself. Though by balanced weight distribution the ergonomics of wearing don't suffer, the all-in-one solution is heavier and has considerably larger footprint. Furthermore, computational resources that reasonably can be incorporated are limited, and thermal management becomes highly complicated. Also expected useful operational time might be compromised due to limited battery capacity which reasonably can be fitted within such system.

In order to overcome current limitations in display technology, there is a need for a head-mounted display system that at least partly solves the aforementioned problems. One of the suggested routes is a multi-focal display architecture with tethered remote computation. Nevertheless, such setup introduces substantial signal delays.

Therefore, in light of the foregoing discussion, there exists a need to overcome the aforementioned drawbacks and provide an improved system or method for reducing motion-to-photon latency in a head-mounted display system.

### SUMMARY

The present disclosure seeks to provide a method for reducing motion-to-photon latency in a head-mounted display system. The present disclosure also seeks to provide a system reducing motion-to-photon latency in a head-mounted display system. Furthermore, the present disclosure also seeks to provides another method reducing motion-to-photon latency in a system comprising a head-mounted display apparatus and a remote rendering unit. An aim of the present disclosure is to provide a solution that overcomes at least partially the problems encountered in prior art.

In an aspect, an embodiment of the present disclosure provides a method for reducing motion-to-photon latency in a head-mounted display system, the head-mounted display system having at least one display for displaying an image, a tracking system for tracking motion of a head, the method comprising:
(a) obtaining a first pose data from the tracking system at a first moment of time;
(b) forming a first pose forecast (F1) for a predicted time of displaying the image, wherein the predicted time is a predetermined time after the first moment of time;
(c) creating a first initial image based on the formed first pose forecast (F1);
(d) obtaining a second pose data from the tracking system at a second moment of time, which the second moment of time is after the first moment of time and before the predicted time;
(e) forming a second pose forecast (F2) for the predicted time of displaying the image;
(f) performing a first rapid image transformation for the first initial image based on a first pose difference forecast (DF1) to obtain a second initial image, wherein the first pose difference forecast (DF1) is determined by differences between the first pose forecast (F1) and the second pose forecast (F2);
(g) providing the second initial image for further processing, the further processing comprising:
(h) obtaining a third pose data from the tracking system at a third moment of time, wherein the third moment of time is after the second moment of time and before the predicted time; and
(i) forming a third pose forecast (F3) for the predicted time of displaying the image; and
(j) updating the second initial image by performing a second rapid image transformation for the second initial image based on a second pose difference forecast (DF2), which the second pose difference forecast (DF2) is determined by differences between the second pose forecast (F2) and the third pose forecast (F3).

In another aspect, an embodiment of the present disclosure provides a head-mounted display system for reducing motion-to-photon latency, the head-mounted display system comprising:
- a head-mounted display apparatus comprising:
   a display driver to drive an image on a display;
   a tracking system to obtain a pose data;
   a communication interface to form communication between the head-mounted display apparatus and a remote rendering unit; and
   a processor configured to
      - collect a first pose data at a first moment of time and a second pose data at a second moment of time and provide the collected pose data via communication interface to the remote rendering unit;
      - collect a third pose data at a third moment of time;
      - receive a second initial image from a remote rendering unit via the communication interface;
      - use the third pose data to form a second first initial image from the second initial image via a first rapid image transformation; and
      - receive V-sync signal from the display driver and provide the second initial image to the display driver after receiving the V-sync signal.

In yet another aspect, the present disclosure provides a method for reducing motion-to-photon latency in a system comprising a head-mounted display apparatus and a remote rending unit communicatively coupled with the head-mounted display apparatus when in use, the method comprising:
- obtaining, by the remote rendering unit, a first set of pose data from a tracking system for tracking motion of a head;
- using the first set of pose data to form an initial image to be provided to the head-mounted display apparatus;
- providing the initial image from the remote rendering unit to the head-mounted display apparatus;
- obtaining, by the head-mounted display apparatus, a second set of pose data from a tracking system for tracking motion of the head;
- using the second set of pose data to form a drivable image;
- using display driver to drive the drivable image on a display; and
- updating, line by line the image to be driven by using the second set of pose data.

Embodiments of the present disclosure substantially eliminate or at least partially address the aforementioned problems in the prior art and enable the system or method to reducing motion-to-photon latency.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is a simplified schematic illustration of a head mounted display system for reducing the motion-to-photon latency, in accordance with an embodiment of the present disclosure;
FIG. 2 is a block diagram of a head mounted display system for reducing the motion-to-photon latency, in accordance with an embodiment of the present disclosure;
FIG. 3 is a detailed schematic illustration of a head mounted display system for reducing motion-to-photon latency, in accordance with various embodiment of the present disclosure;
FIG. 4 is a qualitative block diagram illustration of a simplified sequence of actions within a rendering image output pipeline to illustrate sources of time delay, in accordance with an embodiment of the present disclosure;
FIG. 5 is a qualitative block diagram illustration of a simplified sequence of actions within the rendering image output pipeline to illustrate sources of time delay, in accordance with another embodiment of the present disclosure;
FIGs. 6A and 6B are flowcharts of a method for reducing motion-to-photon latency in a head-mounted display system, in accordance with an embodiment of the present disclosure; and
FIG. 7 is a flowchart of a method for reducing motion-to-photon latency in a head-mounted display system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In an aspect, an embodiment of the present disclosure provides a method for reducing motion-to-photon latency in a head-mounted display system, the head-mounted display system having at least one display for displaying an image, a tracking system for tracking motion of a head, the method comprising:
(a) obtaining a first pose data from the tracking system at a first moment of time;
(b) forming a first pose forecast (F1) for a predicted time of displaying the image, wherein the predicted time is a predetermined time after the first moment of time;
(c) creating a first initial image based on the formed first pose forecast (F1);
(d) obtaining a second pose data from the tracking system at a second moment of time, which the second moment of time is after the first moment of time and before the predicted time;
(e) forming a second pose forecast (F2) for the predicted time of displaying the image;
(f) performing a first rapid image transformation for the first initial image based on a first pose difference forecast (DF1) to obtain a second initial image, wherein the first pose difference forecast (DF1) is determined by differences between the first pose forecast (F1) and the second pose forecast (F2);
(g) providing the second initial image for further processing, the further processing comprising:
(h) obtaining a third pose data from the tracking system at a third moment of time, wherein the third moment of time is after the second moment of time and before the predicted time; and
(i) forming a third pose forecast (F3) for the predicted time of displaying the image; and
(j) updating the second initial image by performing a second rapid image transformation for the second initial image based on a second pose difference forecast (DF2), which the second pose difference forecast (DF2) is determined by differences between the second pose forecast (F2) and the third pose forecast (F3).

In another aspect, an embodiment of the present disclosure provides a head-mounted display system for reducing motion-to-photon latency, the head-mounted display system comprising:
- a head-mounted display apparatus comprising:
   a display driver to drive an image on a display;
   a tracking system to obtain a pose data;
   a communication interface to form communication between the head-mounted display apparatus and a remote rendering unit; and
   a processor configured to:
      - collect a first pose data at a first moment of time and a second pose data at a second moment of time and provide the collected pose data via communication interface to the remote rendering unit;
      - collect a third pose data at a third moment of time;
      - receive a second initial image from a remote rendering unit via the communication interface;
      - use the third pose data to form a second first initial image from the second initial image via a first rapid image transformation; and
      - receive V-sync signal from the display driver and provide the second initial image to the display driver after receiving the V-sync signal.

In yet another aspect, the present disclosure provides a method for reducing motion-to-photon latency in a system comprising a head-mounted display apparatus and a remote rending unit communicatively coupled with the head-mounted display apparatus when in use, the method comprising:
- obtaining, by the remote rendering unit, a first set of pose data from a tracking system for tracking motion of a head;
- using the first set of pose data to form an initial image to be provided to the head-mounted display apparatus;
- providing the initial image from the remote rendering unit to the head-mounted display apparatus;
- obtaining, by the head-mounted display apparatus, a second set of pose data from a tracking system for tracking motion of the head;
- using the second set of pose data to form a drivable image;
- using display driver to drive the drivable image on a display; and
- updating, line by line the image to be driven by using the second set of pose data.

The present disclosure provides a method for reducing motion-to-photon latency in a head-mounted display system. The head-mounted display system may be operatively coupled to one or more rendering systems to execute the method for reducing the motion-to-photon latency. In the present embodiments, the operative coupling is done in a wireless manner.

Herein, the method is employed for optically see-through system intended for augmented reality applications, wherein the digital 3-D content is overlayed onto a real-world. Alternatively stated, the method is employed for creating a perception of false reality for a user via virtual objects being displayed in the physical world through the head-mounted display system. Generally, the head-mounted display system (or optically see-through systems intended for augmented reality applications) comprises a display, a processing unit, an image splitter module, a spatial localization (or tracking) module and an image rendering unit. Typically, augmented reality (AR), as well as virtual reality (VR) head-mounted displays units provide the best experience when, no noticeable delays between the beginning of a movement and a corresponding visual information is present. Alternatively stated, the motion-to-photon latency between an initial motion and new frame output should be eliminated or be negligible or miniscule (preferably, below 10 milliseconds). In cases of optical see-through (OST) augmented reality head-mounted display systems this is of highest importance, as the human visual system is highly perceptive of any delays or inconsistencies between a real-world scene and a digital overlay. In a situation, when changes to the real-world are instantaneous (due to optical see-through nature), the digital overlay has to adapt extremely rapidly to the changed perspective. Generally, the head-mounted display system includes computational elements such as a memory, a processor, a data communication interface (or a network interface), a network adapter and the like, to store, process and/or share data or information with other devices or system components, such as the remote rendering unit, or a remote server and the like. Further, optionally, the head-mounted display system comprises a communication interface to transmit or receive image data to or from the head-mounted display system. The "*communication interface"* refers to a communication medium or channel configured to connect or communicatively couple various system components. The communication interface may be any one of a user interface, a communication network or a communication module. Examples of communication interfaces include, but is not limited to, graphical user interfaces (GUIs), application programming interfaces (APIs) and so forth, or communication networks such as Local Area Networks (LANs), Wide Area Networks (WANs), Metropolitan Area Networks (MANs), Wireless LANs

(WLANs), Wireless WANs (WWANs), Wireless MANs (WMANs), the Internet, second generation (2G) telecommunication networks, third generation (3G) telecommunication networks, fourth generation (4G) telecommunication networks, fifth generation (5G) telecommunication networks, and Worldwide Interoperability for Microwave Access (WiMAx) networks.

In the present disclosure, the proposed multi-focal display architecture of this invention overcomes limitations of previous art i.e., the image depth planes comprising a full 3D scene, are output substantially simultaneously. The effect of such output approach is reduced perceived flicker and virtually eliminated image depth plane split-up. Furthermore, in one of the embodiments, also color split-up within the image depth plane is also virtually eliminated.

The present disclosure implements a wireless connection between the head-mounted display unit and the remote image rendering unit. By removing high performance computational components from the head mounted display system such configuration allows a better battery life, lower weight of the head-mounted display, thus facilitating comfort of wearing, as well as improved thermal management. Furthermore, the remote rendering unit can be configured to have computational power otherwise not feasible within a mobile processing solution for all-integrated head-mounted display solution. Additionally, the present disclosure provides a method for a better motion-to-photon latency, thus, resulting in giving a better and more precise perception of the augmented reality to the user by overcoming the problem of image depth plane split-up and the misalignment between the real-world scene and the digital overlay.

Throughout the present disclosure, the term *"remote rendering unit"* or rendering system or image rendering unit, relates to a computational device configured for performing image rendering (or image synthesis) to generate an image (photorealistic or non-photorealistic) from either a 2D or 3D model via one or more computer programs, to be displayed on the at least one display of the head-mounted display system. In one embodiment, the remote rendering unit is a personal computer having a dedicated high-performance graphics processing unit (graphics accelerator), wherein a wireless data link is established between the head-mounted display unit and the remote rendering unit utilizing dedicated peripherals (such as wi-fi transceiver module or similar devices). In another embodiment, the remote rendering unit is a cloud-based computation unit, for example, communicably coupled to 5G wireless data transmission base stations and 5G technology used to establish a remote link or a wireless connection between the head-mounted display system and the remote rendering unit. Beneficially, the application of the remote rendering unit with the head-mounted display system is that it helps to remove high performance computational components from the head mounted display system and enables a sustainable configuration allowing a better battery life, lower weight of the head-mounted display system and thus facilitating high degree of comfort while wearing, as well as improved thermal management. Notably, the remote rendering unit may be configured to have the required computational power otherwise not feasible within a mobile processing solution for all-integrated head-mounted display solution.

While remote rendering has many benefits, however remote rendering introduces technical challenges in relation to multi-focal display architecture that are either completely addressed or at least partly addressed by the present disclosure. Typically, utilization of remote processing introduces additional and unpredictable time delays associated with wireless data transfer between the head-mounted display unit and the remote rendering unit. Notably, the amount of graphical data, to be transmitted between the remote rendering unit and the head-mounted display unit may be substantially large. For example, in an uncompressed format, if 3 focal planes per each eye are to be transmitted (i.e., 6 in total) with a Full-HD resolution each (1920x1080 pixels) at a 24-bit color depth, it amounts to approximately 0.3 Gigabits (or 35.6 Megabytes). Consequently, if the image is updated with a frequency of at least 60 Hertz (Hz), the total required bandwidth is more than 18 Gigabits per second, which poses a huge challenge considering real-world performance of wireless networks. For example, a wireless data transmission standard IEEE 802.11n in a 5 GHz band realistically achieves 450 Mbit/s bandwidth. In contrast, the IEE 802.11ac standard in 8 channels can achieve theoretically up to 6,933 Gbit/s bandwidth, which may still be in-sufficient to support uncompressed data transfer considering the real-world performance.

Generally, to ensure efficient graphical data transmission wirelessly between the head-mounted display unit and the remote rendering unit, image/video compression is employed. For example, a currently active High Efficiency Video Coding (HEVC) standard or H.265 comprising multiple profiles allows a very high compression with high image quality. Further, in an AR setting, in contrast to a VR setting, the augmenting content typically comprises of objects or parts of an image and thus a majority of a frame may remain blank. Thus, considering the limited amount of information, the image is divided into multiple image depth planes. Notably, such images or video streams are well-suited for HVEC compression and potentially achieves a very high image quality at a limited bitrate. Thus, the presented disclosure relies on video compression techniques and devices for compressing the image data to support and enable efficient wireless data transmission between the remote rendering unit and the head-mounted display system. In an example, using H.265 data streams with up to 300-400 Megabits per second are realistic and yield good results, virtually indistinguishable from uncompressed data format for the majority of people. Video stream data compression is a necessity when using the remote rendering unit, with the described split-mode rendering approach; but it poses technical challenges with respect to multi-focal display architecture and multi-plane image rendering.

Typically, multi-plane 3D content is of two types, a true volumetric image (for example, a medical data obtained by tomography methods) and a computer-generated 3D image (or surfaces with texture overlays). In volumetric images, translucency of front layers (closest to the viewer image planes) results in visible deeper image layers and thus, for a given surface coordinate (X-Y), there exists multiple pixels at different depths, that contribute to the overall image formation. In contrast, image rendering of computer-generated surfaces, such as if no translucent textures are in the front layers which are located behind or otherwise are blocked by the front surface elements; in such cases, the present disclosure provides a simplification of sending a prerendered image with a corresponding depth map to yield a better data efficiency by avoiding using the image compression process.

The multi-focal display architecture relies on image depth blending to mask the boundaries between image planes i.e., similar to the aforementioned volumetric image or data, as a single surface or image. Notably, the (X-Y) coordinates may have different depth values to account for split pixels i.e., the pixels blended between two neighboring image depth planes to mask the boundary region. Typically, in depth blending, the intensity of pixels attributed to an inter-plane space (i.e., a space, wherein there is no physical image depth plane), is proportionally divided between the image planes. For example, if the pixel falls exactly in between the middle of the image planes, the intensity is divided accordingly i.e., 50% of the intensity is displayed on one image plane, whereas the other 50% is displayed on another image plane. Similarly, if the pixel depth falls below 1/3 of the distance between image plane A and image plane B (closer towards image plane A), then the intensity would be divided as 66% (approximately 70% in operation) intensity displayed on image plane A, while 33% (approximately 30% in operation) of intensity is displayed on image plane B. However, the majority of pixels correspond exactly to the given image depth planes or the majority of pixels fall within the interplane space. In such cases, while performing depth blending, thresholds for blending pixels may be varied. In an example, all pixels of the interplane space are depth-blended. In another example, only a portion of the total pixels, such as the pixels placed further than a 1/3 or one-third of the distance away from the given image depth plane are depth-blended. Notably, the depth-blending ratios may be linear or nonlinear depending upon the need of the implementation. In an exemplary scenario, the depth blending ratio (division of intensities) depends on the overall intensity (value) of a pixel. For example, dark and bright pixels have different intensity division ratios. In another exemplary scenario, while considering the distance, based on which the pixel blending ratios is determined, also referred to as optical distance or distance in diopter space (or reciprocal space), for example, a half-way or (1/2) in the diopter space between two neighboring image depth planes may not correspond to the exact midpoint in real depth space. Thus, effectively to achieve best appearance of a multi-focal image even for computer generated textured surfaces, the data becomes volumetric, as depth-blending is enabled. Consequently, the data transmission of a single 2D frame and corresponding depth map is not an optimum solution. Therefore, in one embodiment, the image depth-blending may be performed on the hardware of head-mounted display system, for example the processing unit or even in an image splitter or demultiplexer module.

In the preferred embodiment, the image depth blending step is carried out by the remote rendering unit to provide '2N' image depth planes, wherein N refers to the number of physical (hardware) image depth planes. The rendered image depth planes are arranged in a composite mosaic, which is compressed and transferred wirelessly to the head-mounted display system. Typically, while forming a mosaic image (texture) of a given resolution of K×L, a H.265 image compression algorithm may arise some image details compromise, especially, at the boundary between intended image depth planes. Thus, upon decoding, a simple division into corresponding image depth planes may yield multiple image artefacts. Beneficially, to avoid such a scenario, the present invention comprises enlargement of the K×L output texture to an updated or enlarged K'×L' output texture, wherein the additional pixels are introduced at the boundaries between the image depth planes arranged in the texture. Further, the pixel values of the introduced additional pixels are determined by calculating a gradient from the pixels on one image depth plane to the pixels of another image depth plane. Consequently, upon decoding such data, the added boundary pixels are discarded, thus minimizing occurrence of image artefacts and minimizing possible artefacts imposed by the compression algorithm.

The present disclosure provides the head-mounted display system having at least one display for displaying an image. The "*display*" refers to any electronic visual output device, informally a screen, for presentation of the images, texts, or videos transmitted electronically, without producing a permanent record. For example, the at least one display may be a head-up display (HUD), virtual-retina device (VRD), liquid crystal display (LCD), light emitting diode display (LED), quantum dot LED (QLED), Organic LED (OLED), Passive Transparent Display (PTD). Typically, the display is an optical see through (OST), however a visual see through display (VST) may also be employed. In operation, the user employing the head-mounted display system obtains an enhanced view of the real environment based on 3-D system generated objects (or images) superimposed onto the real world and displayed via an optical see through (OST) display. Notably, the OST display employs one or more lenses, semi-transparent or transparent mirrors, integrated in the head-mounted display system to display the image.

In an embodiment, the at least one display is a display of a multifocal display arrangement. The multi-focal display arrangement comprises of at least two high-resolution micro-displays optically aligned on a single optical path (or axis). In an example, for performing the optical combination, a beamsplitter is used. Notably, the at least one display is self-emissive. For example, the at least one display may be an OLED type or inorganic LED (i-LED), or LCD based micro-displays with an illuminated backplane. The displayed image in the at least one display (generally, a micro-display) is magnified by an eyepiece. Further, in order to form multiple virtual focus planes, the micro-displays are positioned at slightly different distances from the magnifying eyepiece. Furthermore, the location of the micro-displays is set between the effective focal distance of the magnifying eyepiece thus resulting in virtual focus planes at distances closer than infinity. However, peculiarities associated with utilizing multiple micro-displays for generation of focus planes at different depths occur during the virtual output of the multiple image depth planes simultaneously. In an example, if a 3D scene is approximated with three focal planes P1, P2, P3 with corresponding depths d1, d2, d3, the image output for P1, P2 and P3 may be configured to occur virtually simultaneously. Generally, the at least one display is configured to output images in a progressive manner i.e., in a line-by-line manner. However, from the standpoint of human perception, the image planes are output simultaneously. Beneficially, such an output mechanism eliminates the image plane break-up, that may occur in time-sequential systems, during instances of rapid head movement.

Another aspect of an optical see-through Augmented Reality head-mounted display system is the accuracy of digital image overlay. Furthermore, as the head of the user is moved, any (even a small) misalignment between the real-world scene and the digital overlay becomes apparent. In practice, there are multiple sources of time delays. In the context of the invention, the sources of delays are associated to the Localization (Tracking) system including the inertial measurement unit (IMU), the data update rate, latency in wireless transmission, rendering time, decoding and buffering time, and a greater number of minor signal delays associated to decomposition and image output on the image sources. Consequently, from the time when an image rendering is initiated (started) using the first pose data from the tracking system (vi) at the first moment of time, the rendered image can actually be shown by the image source, the positional data will be different (vf) and, if no mitigative measures are taken, the displayed image will not correspond to the actual situation and cause mis-alignment with respect to real world. Thus, to overcome these effects, manifesting primarily due to the inherent remote rendering and wireless data transmission of the head-mounted display system, the present disclosure foresees multiple actions as described in detail herein the proceeding paragraphs.

As discussed, the head-mounted display system comprises a tracking system for tracking motion of a head. The tracking (or localization) system is integrated as a part of the head-mounted display system and is configured to operate as an *"inside-out"* tracking device. For example, the tracking system may comprise a set of two or more cameras with optional depth cameras (for example, time of flight camera, structured light projector etc.) Herein, the tracking system monitors the motion of a head of the user employing the head-mounted display system, whereby the field of view of the user is determined to generate the output image. Typically, the tracking system is configured to generate a pose data (or a position and orientation data) of the objects in the field of view of the user. For example, the positional data may be a localization (an offset vector, a vector from the origin of the mapped space to the current position) in a mapped space, corresponding angular orientation, translational and angular velocity and acceleration. Optionally, the tracking system is communicably coupled to a processing unit to provide the processing unit with preprocessed positional data, wherein the processing unit further adds a time-stamp to the said set of positional data for further accuracy and precision.

In an embodiment, the tracking system further comprises built-in computational logic, as well as integrated inertial measurement unit (IMU), wherein the IMU comprises of a plurality of sensors such as, but not limited to, gyroscopes, accelerometers, proximity sensors, position sensors, optical sensors and so forth. In an alternative embodiment of the invention, the tracking system configuration is changed, wherein the display processor is configured to perform pose extraction based on the coupled imaging devices, depth sensors and the IMU. However, the same principles of pose transmission encoding with time stamp etc. are applicable.

In another embodiment, the tracking system is an external tracking system. In other words, an outside tracking camera system is set up, for example, in case of a bound controlled environment such as, a surgical room, a warehouse or a vehicle cockpit. In such cases one of the configurations foresees ultra-low latency wireless pose-data transmission from the external tracking unit to the head-mounted display unit, which complements the data with immediate readings from IMU (within the head-mounted display unit), encodes a time stamp and sends the composite pose data to the remote rendering unit. Consequently, further actions within the motion-to-photon pipeline are executed as previously described. In alternative embodiment, the external tracking system is directly communicably coupled to the network; for example, via a wired connection plugged into a router which is (wirelessly) communicably coupled to at least one head-mounted display unit. In this case, the external tracking system relies on an internal clock and transmits the pose data directly to the remote rendering unit, whereas the head-mounted-display unit sends supplemental data from IMU and/or optional internal inside-out tracking unit to the remote rendering unit also with encoded time stamp. The remote rendering unit then synthesizes complete positional data based on the available sources. In this setup, the clocks of corresponding devices i.e., the head-mounted display system, the external tracking system and the remote rendering unit, as present on the same network, are synchronized (for example, with a time server). In an example, precision time protocol is used. Alternatively, if available, the synchronous time may be achieved by utilizing satellite (for example GPS, Galileo etc.) clock data, or data from longwave time signals (DCF-77 and similar).

The method for reducing motion-to-photon latency in the head-mounted display system comprises obtaining a first pose data from the tracking system at a first moment of time. Herein, the head-mounted display unit is configured to receive the first pose data from the tracking system. The term "first pose data" refers to the position and orientation data collected by the tracking system at the first moment of time. The first moment of time is a reference standpoint, for future time instances to be compared with. Typically, the first pose data is the position and orientation data relating to a mapped space or field of view of user, corresponding angular orientations, associated translational, and/or angular velocity and acceleration.

The method further comprises forming a first pose forecast (F1) for a predicted time of displaying the image, wherein the predicted time is a predetermined time after the first moment of time. That is, upon receiving the first pose data from the tracking system, the method comprises forming the first pose forecast at a predicted time. Typically, the first pose data comprising the time stamp is transmitted to the remote rendering unit to be used for setting up a 3D scene. However, nevertheless, for setting up a 3D scene, the first pose data is not directly employed in the raw state, since by the time the rendered frame would reach the eyes of the viewer, a time lag of at least several tens of milliseconds (ms) may be generated. Thus, to eliminate the generated time lag, the received first pose data is used to forecast a new pose at a future instance, to achieve a better correspondence or synchronization with respect to the rendered frame and the eyes of a viewer. Typically, the pose forecast is performed based on the velocity and acceleration data, while attributing a higher weight towards angular components as these primarily comprise the rapid movements of the human head. Generally, the natural movement of human head has a predictable pattern and discernible as a movement of an inertial object. In an embodiment, a simple multi-layer preliminary trained neural network may be used to forecast the first pose data. The simplicity of neural network is chosen to ensure rapid execution and thus real-time operation, whereas it is favored over analytical optimized equations due to more accurate nature of forecasts.

In an embodiment, the predetermined time after the first moment of time is defined by measuring latency between communication between the head-mounted display and the remote rendering unit. Typically, the latency between the pose data communicated between the head-mounted display system and the rendering unit is measured to define the pre-determined time. The measured latency enables the method to synchronize the time-delay during the pose data communication and enable precise prediction of pose data from the received first pose data. Generally, as the 3D image is rendered with the forecasted pose input, the full rendering of 3D scene takes time and thus new pose data is received. Consequently, the new pose data provides a more reliable forecast, since the time difference for prediction has been reduced. Thus, a new forecast is made based on which the updated forecasted pose data is compared to the previous pose data and based on the difference, a rapid image transformation at the remote rendering unit is executed. Generally, the rapid image transformation does not require a full rendering process and thus is a swift process. Moreover, since the expected pose differences are minute, the amount of pixels to be altered may be accommodated by relatively simple geometrical transformations that make the method faster and efficient.

The method further comprises creating a first initial image based on the formed first pose forecast (F1). Upon forming the first pose forecast (F1), the method comprises creating a first initial image based on the first pose forecast. Typically, the first pose forecast is employed to generate the first initial image. As used herein, the *"first initial image"* refers to a pre-liminary generated image based on the first pose forecast, wherein the first initial image may be further processed to generate the final rendered image. The method further comprises obtaining a second pose data from the tracking system at a second moment of time, wherein the second moment of time is after the first moment of time and before the predicted time. Upon generating the first initial image based on the first pose forecast, the method comprises obtaining the second pose data from the tracking system. Typically, the second pose data is generated by the tracking system at the second moment of time. Upon capturing the first pose data at the first moment time, the tracking system is configured to generate the second pose data after a time interval at the second moment of time and transmit the second pose data for further processing.

The method further comprises forming a second pose forecast (F2) for the predicted time of displaying the image. Upon receiving the second pose data, the method comprises forming the second pose forecast at the predicted time of displaying the image. The second pose forecast is formed using the second pose data transmitted by the tracking system to enable forming the second pose forecast at the pre-determined time i.e., when the rendered 3D image is to be displayed to the user.

The method further comprises performing a first rapid image transformation for the first initial image based on a first pose difference forecast (DF1) to obtain a second initial image, wherein the first pose difference forecast (DF1) is determined by differences between the first pose forecast (F1) and the second pose forecast (F2). The term *"rapid image transformation"* refers to a function performed on an input image to generate an output image. The rapid image transformations are also referred to as late-stage reprojections, time warp and so forth. For example, Microsoft^{®} refers to rapid image transformation as late-stage reprojection. Herein, the first initial image is an input image, and the method comprises performing the first rapid image transformation on the first initial image based on the first pose difference forecast to obtain an output image i.e., the second initial image. The first pose difference forecast refers to the difference in the values of the second image forecast with respect to the first image forecast.

It will be appreciated that the above steps of the method, except for the first step i.e., obtaining the first pose data from the tracking system at the first moment of time, are performed by the remote rendering unit, whereas the steps of the method to be described in the proceeding paragraphs are performed by the head-mounted display system.

In the present disclosure, the introduced time delays may be considered as either predictable (i.e., predetermined or predetermined to be within certain boundaries) or as unpredictable (i.e., the variation may arbitrarily include episodically or momentarily exceed certain value or limits). The method foresees the utilization of wireless data transmission channel between a wireless transceiver (data communication interface) or a high-speed access point (WiFi, 802.11ax, utilization of 5G network or similar) communicably coupling the remote rendering unit and the head-mounted display unit (augmented reality glasses). Thus, to determine actual time delay associated with internal and external impacts, in the signal transmission, the preferred embodiment of the present disclosure relies on direct time measurements. The pose data is encoded with a time stamp, while the rendered, transformed and wirelessly transmitted image information (from the remote rendering unit to the head-mounted display unit) also comprises the original time stamp, as well as an additional target time stamp for the forecasted frame. Upon receiving the data, the display processor of the head-mounted display unit compares the received time-stamp and compares to actual internal time thus determining lapsed time period for full cycle. This information consequently is also encoded with the pose data and time stamp. In particular, the time delay is a time constant, defined or formed from the first moment of time the pose is recorded to the second moment of time, wherein the corresponding image frame is displayed to the eyes of a user. More specifically, the time constant may include bidirectional wireless data transmission time, and associated time delays with image rendering and rapid image transformation, encoding and decoding, buffering, second and third cycles of rapid image transformation performed at the head-mounted display system and also a half period between the V-sync pulses, wherein progressive output micro-displays are used as an image source. Further, the time-sequential system is set-up as the multi-focal image engine (for example electrically switchable liquid crystal diffuser elements with rear-projection micro projector), wherein the time constant would account for multiple target time moments and the rendering would be performed specifically per image plane to minimize image plane split-up. Consequently, instead of targeting additional time period of 0.5 **τ**, for each image depth plane; the selected value is chosen based on the number of utilized image depth planes. The additional term to the time constant would be (***τ*/2*N***) + ***i***(***τ*/*N***)*,* wherein 'N' refers to the number of focal planes, 'τ' refers to the time between V-sync pulses or otherwise a time used for and output of whole volumetric (3D) frame, and 'i' refers to the image plane index (0...**N**-1).

The method also comprises providing the second initial image for further processing. That is, upon performing the first rapid image transformation on the first initial image to obtain the second initial image from the first initial image, the method comprises providing the obtained second initial image for further processing.

Throughout the present disclosure, the term *"display processor"* refers to a structure and/or module that includes programmable and/or non-programmable components configured to store, process and/or share image data or information. Optionally, the display processor includes any arrangement of physical or virtual computational entities capable of enhancing information to perform various computational tasks. Furthermore, it will be appreciated that the display processor does not necessarily entail a single processor and may be implemented as a hardware processor and/or plurality of hardware processors operating in a parallel or in a distributed architecture. Optionally, the processors in the display processor are supplemented with additional computation system, such as neural networks, and hierarchical clusters of pseudo-analog variable state machines implementing artificial intelligence algorithms. In an example, the display processor may include components such as a memory, a data communication interface, a network adapter and the like, to store, process and/or share information with other system components, such as the remote rendering unit. Optionally, the display processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit, for example as aforementioned. Additionally, the processing arrangement is arranged in various architectures for responding to and processing the instructions for the method for reducing motion-to-photon latency in the head-mounted display system.

Herein, the said further processing is performed by the head-mounted display system via the display processor, wherein the display processor is configured to execute the steps of the method for reducing motion-to-photon latency in the head-mounted display system. In one embodiment, an adaptive image output is employed in cases wherein, a scene is rendered on the remote rendering unit, upon which further processing and/or analysis is performed. In some cases, some image depth planes may not include any image information and consequently some image planes remain blank (i.e., not carrying useful information). In other words, the image or 3D object occupies a certain space in depth, best represented by N-1, N-2, and so on image depth planes, wherein 'N' refers to the maximum number of available physical (or hardware) image depth planes. Further, optionally, the image depth blending conditions may be configured to force utilization of a lesser number of image depth planes to reduce the utilization of the data transmission bandwidth and, for example, a higher image frame repetition rate (transmission through wireless data channel) achieved at similar bandwidth (bit-stream). Beneficially, the higher image frame repetition rate yields lower time delays from the motion to image output, as well as performing a better image smoothing operation during rapid movements. Typically, implementing such data transmissions and encoding, the receiving part (i.e., head-mounted display system) is configured to receive the graphical data as well as a signaling data comprising information on the number and identity of the transmitted image planes. Notably, the signaling information is encoded in the header of a data packet transmitted. Beneficially, for providing robustness to the transmitted signaling data, cyclic redundancy checks (CRC) may be applied. Alternatively, a header comprising multiple copies of signaling information is compared as a redundancy mechanism for excluding data corruption. Optionally the signaling information is sent over multiple headers and gathered at the receiving head-mounted display system to perform further comparison. In one example, at least three data entities carrying signaling information are gathered and compared among each other, if all the three data entities coincide, the information is assumed to be uncorrupted. In another example, at least five data entities carrying signaling information are gathered to yield a decision on the corruption state of the received signaling data. In yet another example, ten data entities carrying signaling information are gathered to decide on the data corruption. Thereby, the data packet headers are received substantially simultaneously along with the graphics data, upon which the decoding and corruption check is performed by the display processor.

In an embodiment, the head-mounted display system comprises a dedicated hardware decoder/encoder, that may be a part of the display processor or as a separate unit communicably coupled to the display processor, to decompress the previously compressed graphical data stream. As the graphical data is decompressed, the graphical data is buffered within the random-access memory of the display processor. Optionally, the display processor also comprises a dedicated graphics processing unit, to perform one or more computations (or data manipulations) on the received graphical data. The calculation or data manipulation may include any one of or a combination of, data reformatting, "boundary-pixel" removal, geometrical transformation (such as pixel shift, perspective correction, image stretching/compression and so forth), image pixel arrangement and/or reformatting (pixel scrambling). Furthermore, the dedicated graphics processing unit (of the display processor within the head-mounted display system) performs pixel arrangement (or scrambling) depending on the display architecture. In the preferred embodiment the display architecture is configured to output image depth planes substantially simultaneously thus avoiding image-plane split-up.

In an alternative embodiment, without departing of the core principles of the present disclosure, the head-mounted display system is configured to support only time-sequential image plane outputs. Thus, in order to exploit full potential of the preferred embodiment and simultaneous image-plane outputs, the GPU of the display processor performs visual data scrambling or rearrangement to fit the hardware architecture of the at least one display. For example, the pixels are reformatted to generate an array, such as in case of 3 focal planes (or a total of 6 focal planes for stereoscopic display) i.e., P1, P2, P3 corresponding to a right eye and P1', P2', P3' corresponding to a left eye, respectively. In an exemplary scenario, a first array comprising the pixels of the received and decoded image data, and a second array comprising the pixels having removed boundary, i.e. "adjusted" or geometrically reformatted pixels, are implemented. Typically, a first row of a generated third array is formed by the first row of P1 and the first row of P1', the second row of third array is formed by the first row of P2 and the first row of P2' while the third row of the third array is formed by the first row of P3 and the first row of P3' with subsequent rows of the third array holding further rows of the corresponding image depth planes following the same pattern. Essentially, the resulting third pixel array or output texture is scrambled. Notably, the first, second or third array may have different sizes, arrangements without limiting the scope of the disclosure. Such scrambled pixel arrangements are necessary due to the display processor being communicably coupled with the image splitter or demultiplexer, which in turn is communicably coupled to the multi focal display engines of the at least one display having multiple image sources in parallel (i.e., forming a 3-D structure such as cuboidal or cubical shape), and thus, the demultiplexer virtually is a driver of multiple image sources (or micro-displays).

In one embodiment, the display processor is communicably coupled to the image splitter module via at least one display port connection. Further, typically, such micro-displays output image data progressively. Consequently, to ensure simultaneous image plane output and minimize possible time delays between 3D image comprising depth planes and between the left and the right eyes, the display processor (or the dedicated graphics processing unit) transmits the image data to the image demultiplexer in a fast manner to minimize the time delay. Thus, the image demultiplexer may operate without a buffer and with minimum time delays between the image depth planes ensuring a virtually simultaneous image output. Alternatively, the image demultiplexer may comprise a buffer (or a memory), to store (or collect or gather) the data for at least a first row of all image depth planes, when a simultaneous data transmission to the multi-plane display engines (micro-displays) is initiated. In such a configuration, beneficially, the time delays between the image depth planes are eliminated. Nevertheless, the absolute synchronization of data output comes at a cost of additional signal delay due to buffering, although a very minor time delay. Essentially, the buffer has to account for 2N-1 first lines of the corresponding image planes, wherein 'N' refers to the number of physical image planes per eye. Herein, the first image line of the last image plane does not require buffering, since the last image output is done simultaneously with the other 2N-1 depth planes towards the image sources of multi-focal image engines. In an example, if we have six depth planes, only five of the six depth planes are required to be buffered, since the sixth depth plane may be throughput directly together with the already buffered (gathered) first five depth planes.

Herein, the said further processing also comprises obtaining a third pose data from the tracking system at a third moment of time, wherein the third moment of time is after the second moment of time and before the predicted time. Typically, the tracking system is configured to generate the third pose data at the third point of time, wherein the third moment of time occurs upon passing a certain time interval after the second moment of time and before the predicted time at which the image is displayed. The said further processing also comprises forming a third pose forecast (F3) for the predicted time of displaying the image. That is, upon obtaining the third pose data from the tracking system, the method comprises forming the third pose forecast (F3) using the third pose data at the predicted time of displaying the image.

In an embodiment, the method further comprises waiting for a next V-sync pulse after the third moment of time and providing the second initial image data to the at least one display when the next V-sync pulse is available. The term "V-sync pulse" refers to a vertical synchronization pulse transmitted after compete transfer of a frame. Generally, the V-sync pulses occupies the entire line interval of a number of lines at the beginning and end of a scan and no image data is transmitted during the vertical retrace. Notably, the pulse sequence is configured to allow a horizontal sync to continue during vertical retrace and at the same time, indicate whether each field represents an even or an odd number of lines in the interlaced systems (depending on the initiation point i.e., either at the start of a horizontal line, or midway through). Typically, upon obtaining the third pose data at the third moment of time, the method comprises waiting for the next V-sync pulse (or the previously obtained second initial data to be transmitted completely) and when the next V-sync pulse is available, the method comprises transmitting the second initial image data to the at least one display.

The method illustrates an idealized situation, whereas in practice, the time constant 't_{c'} may be lower or larger than the v-sync period 'τ'. Typically, t_{c} is expected to be larger than τ. However, in order to supply the image source (i.e., the micro-displays of the at least one display) with new image data at each v-sync period, the image rendering should be carried out with at least the frequency of image source refresh rate. Alternatively stated, if the image source is operating at a constant image refresh rate 'f₁', wherein typically **τ** = 1/**f₁**; in such a scenario, the remote rendering unit is configured to render with at least the same frequency **f₁.** However, due to momentary latency increases in the wireless communications or substantially longer required rendering time, the supposed image frame may not reach the head-mounted display unit in time i.e., within the buffer of accessible by the display processor (or the dedicated graphics processing unit) within the head-mounted display system, while the already visible frame are available and updated frames, as indicated by advanced (from previous) time-stamps are yet to be loaded. Thus, the newest pose data is captured from the tracking system and used to forecast a pose change onto the period of next v-sync. Similarly, as the new forecast is made the forecasted pose is compared to the previously used forecasted pose. In other words, the internal forecast-image transformation loop is repeated on the already once displayed source image.

In contrast, in an alternative embodiment, when the adaptive image refresh rate of the image sources within the multi-focal display engine is utilized, for example, to increase the framerate at a cost of reduced image quality or resolution; the pose data with the corresponding time stamp are supplemented by a rapid-movement flag. The *"rapid-movement"* flag is assigned to pose data and time stamp, when the registered velocity and acceleration values (registered by the IMU) surpass or exceeds a predetermined threshold for onset of vision blur. Further, typically, the at least one display (or micro-displays) is capable of image refresh rate with predetermined values, for example, with frequencies **f₁**=60 Hz, **f₂**=90 Hz, **f₃**=120 Hz. Consequently, beneficially, one or more threshold values for the "rapid-movement" flag may be assigned i.e., the "rapid-movement" flag may be described as, for example, a byte of image data and holding the corresponding value related to the certain corresponding image refresh rate best describes the degree of movement. Furthermore, as the actual data is represented with the inherent time delays, the rapid-movement flag is assigned based on the initial movement forecast (such as the first pose forecast). Thus, optionally, if the expected time constant t_{c} is larger than the V-sync time period **τ**, the "rapid-movement" flag is determined at the remote rendering unit (i.e., not transmitted by the display processor of the head-mounted display unit). Instead, as the "rapid-movement" flag through pose forecast has been determined, it is encoded together with the time-stamp and graphical data to be transmitted to the head-mounted display unit. Upon receiving, the rapid-movement flag is used by the display processor to signal the image demultiplexer unit, which also doubles as an image-source driver to configure the corresponding image sources to a determined image refresh rate (i.e., frequency f₁, f₂, f₃). Moreover, the rapid-movement flag may always be present to signal for a required image refresh rate at the visualization components, however, it will be appreciated that the rapid movement flag may be configured such that there is a default image refresh rate, and the rapid-movement flag is sent or activated only, when other than default image refresh rate is needed, for example, to better align 3D augmenting digital content to a real-world scene.

In an embodiment, the method further comprises obtaining a fourth pose data from the tracking system at a fourth moment of time, wherein the fourth moment of time is after the third moment of time and before the predicted time; forming a fourth pose forecast (F4) for the predicted time of displaying the second initial image; and performing line by line image adjustments to the second initial image comparing the fourth pose forecast with the third pose forecast during driving the at least one display to display the adjusted image lines. In such a scenario after the third moment of time, the time of image output based on an internal clock of the head-mounted display system and timing of the next V-sync pulse, since the image output is typically performed in a line-by-line manner, hence the output of all lines takes a certain period of time after the third moment of time. Thus, if the certain time period for image output is P and the number of image lines is N, then each time offset for every line may be determined as the time between two lines would be P/N and the actual output times are actual *Vsync* + *i*(*P*/*N*)*,* wherein 'i' refers to the index changing from 0 to N-1. Moreover, since the time-stamp for the previous latest pose forecast is known, the method may include performing real-time pose forecasts specifically to the intended time and not the predicted time (which majorly corresponds to the middle of the frame). Thus, by knowing the exact time of the image line output, the real-time pose forecast is performed and compared with the previous forecasts to add rapid image transformation (per-each line). So, effectively, some image lines generated based on the updated time (actual output time) might be before or after the predicted time

The method further comprises updating the second initial image by performing a second rapid image transformation for the second initial image based on a second pose difference forecast (DF2), wherein the second pose difference forecast (DF2) is determined by differences between the second pose forecast (F2) and the third pose forecast (F3). Similar to the first pose difference forecast (DF1), the second pose difference forecast (DF2) is used to perform the second rapid image transformation for the provided second initial image. Notably, the first pose difference forecast (DF1) and the second pose difference forecast (DF2) may or may not be different depending upon the need of the implementation and based on the differences between the two associated pose forecasts (such as, the first and second pose forecast, the second and third pose forecast and so forth).

In the present embodiment, a first set of steps of the method for reducing motion-to-photon latency in a head-mounted display system including, forming a first pose forecast (F1) for a predicted time of displaying the image, creating a first initial image based on the formed first pose forecast (F1), obtaining a second pose data from the tracking system at a second moment of time, forming a second pose forecast (F2) for the predicted time of displaying the image and performing a first rapid image transformation for the first initial image based on a first pose difference forecast (DF1) to obtain a second initial image, are executed in a remote rendering unit; and a second set of steps including, obtaining a third pose data from the tracking system at a third moment of time, forming a third pose forecast (F3) for the predicted time of displaying the image and updating the second initial image by performing a second rapid image transformation for the second initial image based on a second pose difference forecast (DF2), are executed in the head-mounted display.

In another aspect, the present disclosure provides a head-mounted display system for reducing motion-to-photon latency, wherein the head-mounted display system comprises a head-mounted display apparatus comprising a display driver to drive an image on a display, a tracking system to obtain a pose data, a communication interface to form communication between the head-mounted display apparatus and a remote rendering unit and a display processor configured to collect a first pose data at a first moment of time and a second pose data at a second moment of time and provide the collected pose data via communication interface to the remote rendering unit, collect a third pose data at a third moment of time, receive a second initial image from a remote rendering unit via the communication interface, use the third pose data to form a second first initial image from the second initial image via a first rapid image transformation and receive V-sync signal from the display driver and provide the second initial image to the display driver after receiving the V-sync signal.

In operation, the head-mounted display system is worn by the user, while the remote rendering unit is located remotely or separately. For example, the remote rendering unit may be a personal computer with dedicated high-performance graphics processing unit located within the same room as the user to enable a higher degree of freedom for movement, a light-weight construction of the head-mounted display system, optimized thermal management and performance. Alternatively, the remote rendering unit may be a cloud-based rendering solution while wireless transceiver module may be, for example, 5G base station.

The cycle begins with tracking and/or localization in a surrounding space by the tracking system, which can be, for example, a visual SLAM (simultaneous localization and mapping) or a SLAM based on true depth data acquisition. Further, complemented by data from the IMU, typically 6 degrees of freedom are calculated. The calculation may occur via the display processor or alternatively, the time delay may data be calculated by internal processing of the tracking system. The pose data is transmitted via the wireless communication interface to reach the remote processor. The remote processing unit is running a host application, configured to receive the pose data and provide rendering instructions based on the received pose data to the graphics processing unit of the display processor. The graphics processing unit performs a 3D scene rendering in accordance with principles of multi-focal display architecture. Upon finished rendering, the data is compressed using, for example, high efficiency video coding and wirelessly transmitted to the head-mounted display system, wherein the compressed data is received and decoded via hardware encoder/decoder unit. Subsequently, the graphical data is processed by the graphics processing unit, after which it is transferred to the demultiplexer unit, via a graphics interface (for example, HDMI, DisplayPort, MIPI DSI or similar). The demultiplexer unit refers to an interface with the image sources of the multi-focal display engines of the display driver or the at least one display and performs image unpacking and demultiplexing into corresponding image depth planes. Thus, after the image-plane demultiplexing procedure, graphical information is transmitted to the multi-focal display engines via which the user perceives a 3D image.

In an embodiment, the display processor is further configured to collect a fourth pose data at a fourth moment of time and to perform line by line corrections to the provided second initial image during driving using the fourth pose data.

In another embodiment, the head-mounted display apparatus is a multifocal display apparatus.

In yet another aspect, the present disclosure also provides a method for reducing motion-to-photon latency in a system comprising a head-mounted display apparatus and a remote rending unit communicatively coupled with the head-mounted display apparatus. During operation, the method comprises, obtaining, by the remote rendering unit, a first set of pose data from a tracking system for tracking motion of a head, using the first set of pose data to form an initial image to be provided to the head-mounted display apparatus, providing the initial image from the remote rendering unit to the head-mounted display apparatus, obtaining, by the head-mounted display apparatus, a second set of pose data from a tracking system for tracking motion of the head and using the second set of pose data to form a drivable image, using display driver to drive the drivable image on a display and updating, line by line the image to be driven by using the second set of pose data.

In an embodiment, the method further comprises determining a duration of time taken to transfer the initial image between the remote rendering unit and the head-mounted display apparatus. The duration of time taken comprises time-delays associated to pose data processing and transmission from the headset to the remote rendering unit.

In another embodiment, the determined duration is used when forming the initial image.

### DETAILED DESCRIPTION OF THE DRAWINGS

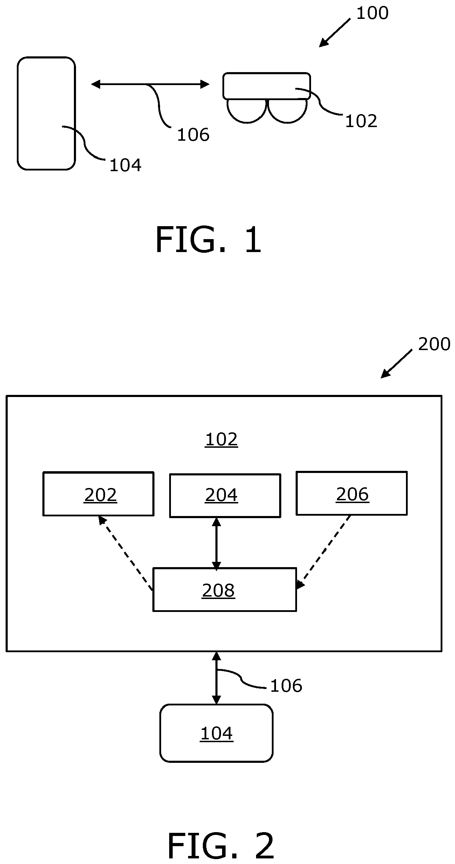

Referring to FIG. 1, illustrated is a simplified schematic illustration of a head mounted display system **100** comprising a head mounted display apparatus **102** communicably coupled to an external remote rendering unit **104** via a communication interface **106.** Herein, the head-mounted display apparatus **102** and the remote rendering unit **104** both comprises of a wireless transceiver module for data transmission, such that the head-mounted display apparatus **102** and the remote rendering unit **104** are wirelessly communicably coupled to each other.

Referring to FIG. 2, illustrated is a block diagram of a head mounted display system **200** for reducing the motion-to-photon latency, in accordance with an embodiment of the present disclosure. As shown, the head mounted display system **200** comprises a head mounted display apparatus **102** (such as, the head mounted display apparatus of FIG. 1) comprising a display driver **202** to drive an image on a display **204,** a tracking system **206** to obtain a pose data and a communication interface **106** to form communication between the head-mounted display apparatus **102** and the remote rendering unit **104.** The head mounted display system **200** further comprises a display processor **208** configured to collect a first pose data at a first moment of time and a second pose data at a second moment of time and provide the collected pose data via communication interface **106** to the remote rendering unit **104.** Further, the display processor **208** is configured to collect a third pose data at a third moment of time, receive a second initial image from the remote rendering unit **104** via the communication interface **106.** Furthermore, the display processor 208 is configured to use the third pose data to form a second first initial image from the second initial image via a first rapid image transformation and receive V-sync signal from the display driver 202 and provide the second initial image to the display driver **202** after receiving the V-sync signal.

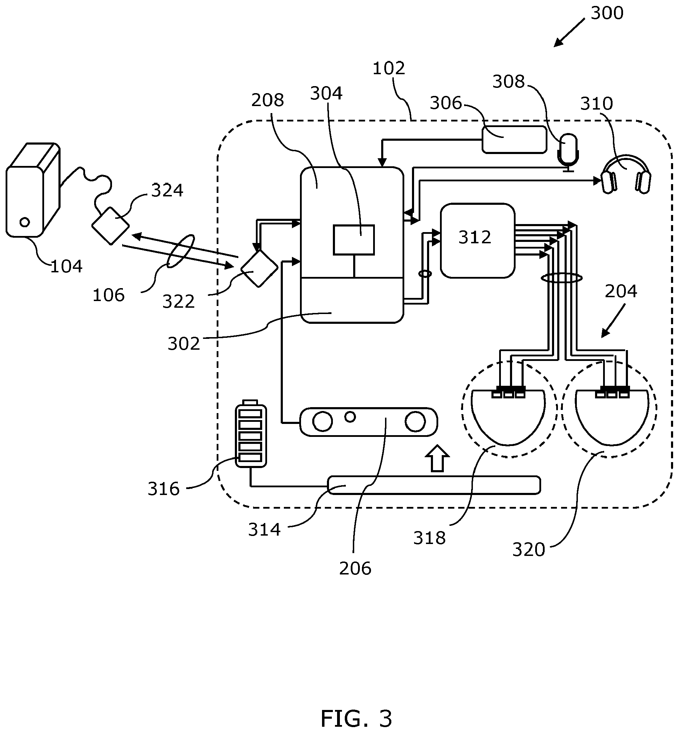

Referring to FIG. 3, illustrated is a detailed schematic illustration of a head mounted display system **300** for reducing motion-to-photon latency, in accordance with various embodiment of the present disclosure. As shown, the head mounted display system **300** comprises a display driver **202** to drive an image on a display **204,** a tracking system **206** to obtain a pose data; and a communication interface **106** to form communication between the head-mounted display apparatus **102** and the remote rendering unit **104.** The head mounted display system **200** comprises a built-in display processor **208** which is essentially an integrated solution i.e., a system on a chip (SOC). The display processor **208** includes at least one central processing unit (not explicitly shown in FIG. 2) and a dedicated graphics processing unit **302.** The display processor **208** is configured to collect a first pose data at a first moment of time and a second pose data at a second moment of time and provide the collected pose data via communication interface **106** to the remote rendering unit **104.** Further, the display processor **208** is configured to collect a third pose data at a third moment of time, receive a second initial image from the remote rendering unit **104** via the communication interface **106.** Furthermore, the display processor **208** is configured to use the third pose data to form a second first initial image from the second initial image via a first rapid image transformation and receive V-sync signal from the display driver **202** and provide the second initial image to the display driver **202** after receiving the V-sync signal. Furthermore, the display processor **208** comprises a hardware-compressed encoder decoder **304** for encoding and decoding the wirelessly shared pose data. The display processor **208** is communicably coupled to the tracking system **206** and an inertial measurement unit (IMU) **306.** Optionally, the IMU **306** is integrated into the tracking system **206.** Also, optionally the display processor **208** is coupled to a microphone **308** and one or more audio-video device(s) **310.** Furthermore, the display processor **208** includes a graphics processing unit to transmit data in the form of bits to a demultiplexer **312** and the demultiplexed data is further transmitted to the at least one multi-focal display **204,** wherein the at least one display **204** further comprises at least two display engines, a first display engine **318** and **320.** Optionally, the head-mounted display system **300** also comprises a power management unit **314** and a battery unit **316.** Optionally, the head-mounted display system **300** comprises at least two wireless transceiver modules **322, 324** for providing the communication interface **106.**

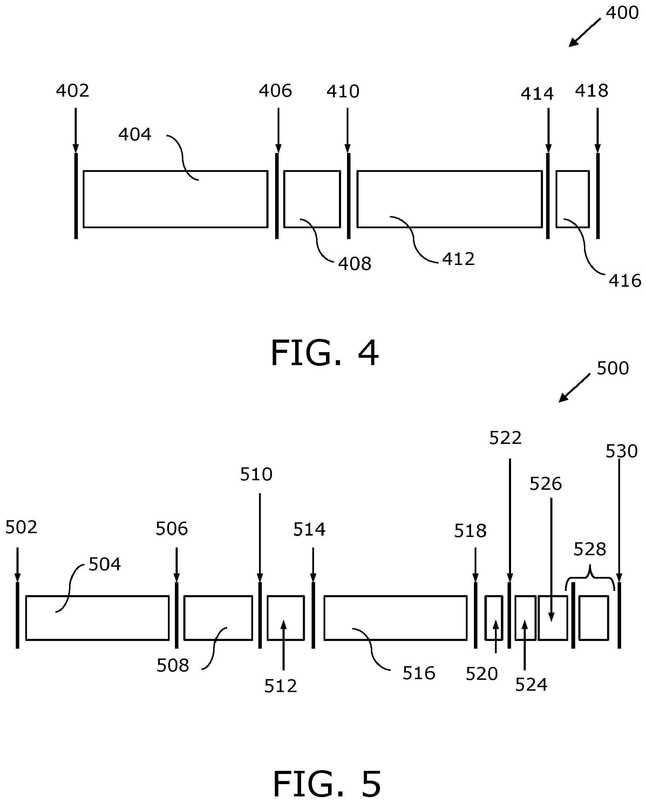

Referring to FIG. 4, illustrated is a qualitative block diagram **400** of a simplified sequence of actions within a rendering image output pipeline to illustrate sources of time delay, in accordance with an embodiment of the present disclosure. As shown, the pose data is obtained by the tracking system **206** in the head mounted display system **100, 200** (as represented by **402**) and then the obtained pose data is transmitted wirelessly to the remote rendering unit **104,** as represented by block **404.** The transmitted data undergoes a pose forecast (as represented by block **404**) and an initial image (as represented by **406**) is rendered. The rendering unit **104** then adds an encoded time stamp (as represented by block **408**) to the initial image after which the information of the initial image is then transmitted back wirelessly (as represented by **410**) to the head mounted display system **100, 200, 300** The received initial image information gets decoded and demultiplexed (as represented by block **412**) and further decompressed into a decompressed image (as represented by **414**) and then buffered in a buffer memory (as represented by block **416**), which is then displayed as the output image (as represented by block **418**). The sequence of actions represented in the FIG. 4 may not be sufficient for reducing motion-to-photon latency, as desired.

Referring to FIG. 5, illustrated is a qualitative block diagram **500** of a simplified sequence of actions within the rendering image output pipeline to illustrate sources of time delay, in accordance with another embodiment of the present disclosure. Notably, herein, the sequence of actions are based on the method for reducing motion-to-photon latency. The pose data obtained (as represented by **502**) by the tracking system **206** in the head mounted display system **100** is transmitted wirelessly to the remote rendering unit 104, as represented by block **504.** Herein, the transmitted data undergoes a pose forecast (as represented by block **504**) and an initial image (as represented by **506**) is rendered. The rendering unit **104** then receives a second pose data and undergoes updated second pose forecast (as represented by block **508**). The initially rendered image then undergoes swift transformation (as represented by **510**) to be formed into a better represented updated second pose forecast **512.** Further, an encoded time stamp (as represented by **514**) is added to updated latest rendered image and the compressed data of the image is transmitted wirelessly (as represented by block **516**) to head mounted display system **100.** The received data undergoes decompression (as represented by block **516**) and the decompressed image data is added to buffer (as represented by 518). Further, another updated pose forecast (as represented by block **520**) is received and image data (as represented by **522**) undergoes another swift transformation. The transformed image waits till the V-sync pulse (as represented by block **524**) is received. Notably, the latest pose data is obtained upon which another pose forecast (as represented by block **526**) is initiated which results in line-by-line swift transformation (as represented by block **528**) of the image in real-time to obtain the final image. The final image is physically outputted (as represented by **530**) to the user with the best precision possible by undergoing repetitive pose forecasts and swift image transformations.

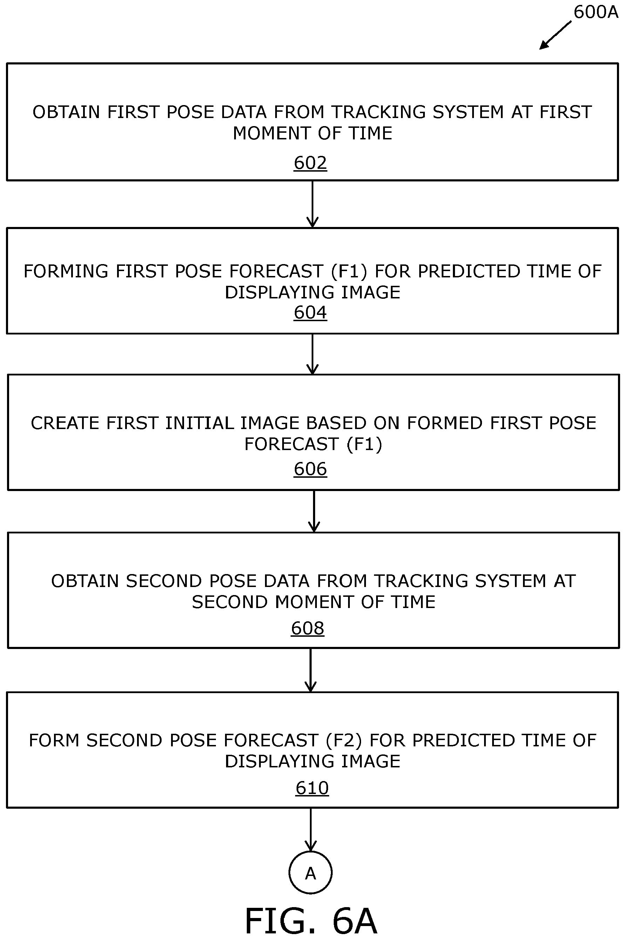

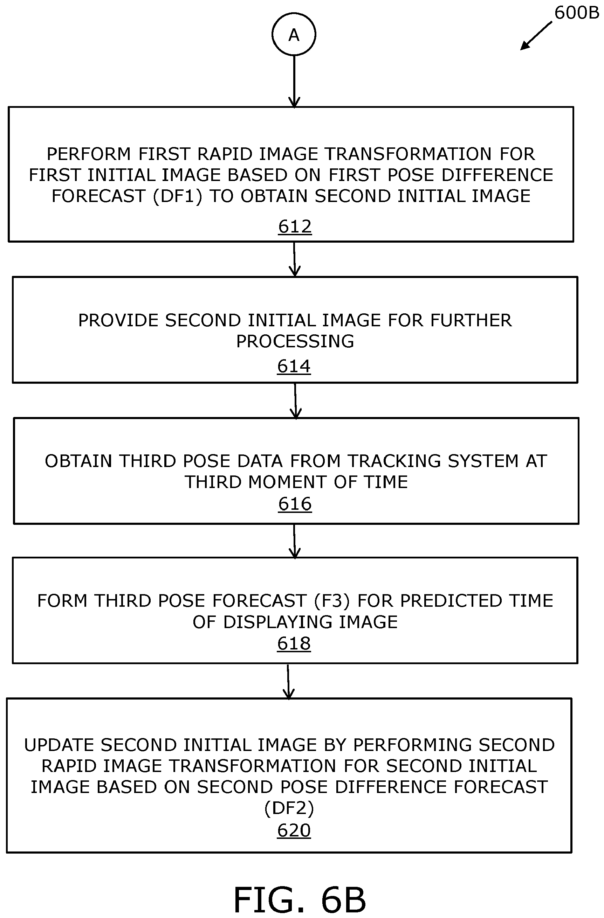

Referring to FIGS. 6A and 6B, illustrated is a flowchart of a method **600** for reducing motion-to-photon latency in a head mounted display system **100, 200** or **300,** in accordance with an embodiment of the present disclosure. As shown, the method **600** comprises steps **602, 604, 606, 608, 610, 612, 614, 616, 618** and **620.**

At step **602,** the method **600** comprises obtaining a first pose data from the tracking system at a first moment of time. The tracking system upon generating the first pose data is configured to provide the first pose data for further operation.

At step **604,** the method **600** comprises forming a first pose forecast (F1) for a predicted time of displaying the image, wherein the predicted time is a predetermined time after the first moment of time. Upon receiving the first pose data, the method **600** comprises forming the first pose forecast at the predicted time of displaying the image.

At step **606**, the method **600** comprises creating a first initial image based on the formed first pose forecast (F1). Upon forming the first pose forecast, the method **600** comprises creating the first initial image based on the first pose forecast.

At step **608,** the method **600** comprises obtaining a second pose data from the tracking system at a second moment of time, which the second moment of time is after the first moment of time and before the predicted time. Upon generating the first initial image, the tracking system is configured to generate the second pose data and provide the second pose data for further operation.

At step **610,** the method **600** comprises forming a second pose forecast (F2) for the predicted time of displaying the image. Upon obtaining the second pose data, the method **600** comprises forming the second pose forecast based on the predicted time for displaying the image.

At step **612,** the method **600** comprises performing a first rapid image transformation for the first initial image based on a first pose difference forecast (DF1) to obtain a second initial image, wherein the first pose difference forecast (DF1) is determined by differences between the first pose forecast (F1) and the second pose forecast (F2). Upon forming the second pose forecast, the method **600** comprises performing rapid image transformation on the first initial image based on the first pose difference forecast to obtain the second initial image.

At step **614,** the method **600** comprises providing the second initial image for further processing. Typically, the previous steps of the method **600,** namely steps **604-612** are performed by the remote rendering unit and for further processing, the second initial image is provided to the display processor of the head-mounted display system.

At step **616,** the method **600** comprises the further processing comprising obtaining a third pose data from the tracking system at a third moment of time, wherein the third moment of time is after the second moment of time and before the predicted time. Herein, the further processing comprises obtaining the third pose data from the tracking system at the third moment of time.

At step **618,** the method **600** comprises forming a third pose forecast (F3) for the predicted time of displaying the image. Upon obtaining the third pose data from the tracking system, the method **600** comprises forming the third pose forecast for the predicted time of displaying the image.

And, at step **620,** the method **600** comprises updating the second initial image by performing a second rapid image transformation for the second initial image based on a second pose difference forecast (DF2), which the second pose difference forecast (DF2) is determined by differences between the second pose forecast (F2) and the third pose forecast (F3). Upon forming the third pose forecast, the third pose forecast is used to determine the second pose difference forecast such that the the method **600** may update the second initial image using the second rapid image transformation based on the second difference forecast.

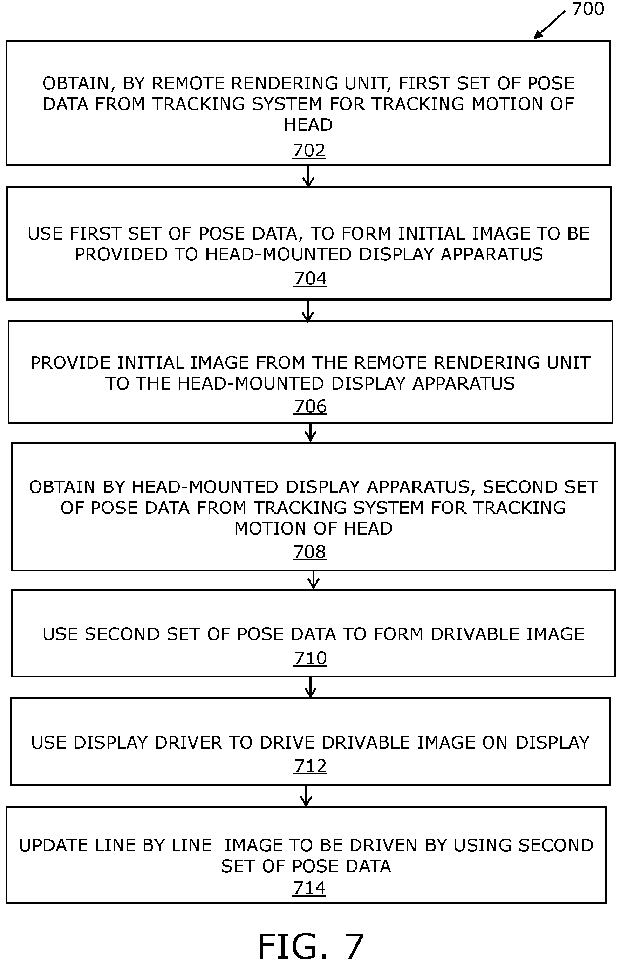

Referring to FIG. 7, illustrated is a flowchart of a method **700** for reducing motion-to-photon latency in a head mounted display system **100, 200** or **300.** Herein, the head-mounted display system **100, 200** or **300** comprises a head-mounted display apparatus **102** and a remote rending unit **104** communicatively coupled with the head-mounted display apparatus **102** when in use, in accordance with an embodiment of the present disclosure. As shown, the method **700** comprises steps **702, 704, 706, 108, 710, 712** and **714.**

At step **702,** the method **700** comprises obtaining, by the remote rendering unit, a first set of pose data from a tracking system for tracking motion of a head. The remote rendering unit is configured to create the first initial image based on the first pose forecast.

At step **704**, the method **700** comprises using the first set of pose data to form an initial image to be provided to the head-mounted display apparatus. Typically, the first set of pose data obtained by the remote rendering unit is employed to generate the initial image.

At step **706**, the method **700** comprises providing the initial image from the remote rendering unit to the head-mounted display apparatus. Upon forming the initial image, the method **700** comprises providing the initial image to the display processor from the remote rendering unit for further processing.

At step **708**, the method **700** comprises obtaining, by the head-mounted display apparatus, a second set of pose data from a tracking system for tracking motion of the head. Typically, when the head of the user experience a motion, a new set of pose data i.e., the second set of pose data is obtained from the tracking system.

At step **710**, the method **700** comprises using the second set of pose data to form a drivable image. Typically, the processor and the rendering unit operatively coupled to each other employ the second set of pose data to generate the drivable image.

At step **712**, the method **700** comprises using display driver to drive the drivable image on a display. Upon generating the drivable image, the method comprises using the display driver to drive the generated drivable image to the at least one display.

And at step **714**, the method **700** comprises updating, line by line the image to be driven by using the second set of pose data. Typically, the method **700** comprises progressively updating the driven image to displayed on the display based on the second set of pose data to account for the head movements of the user.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method (600) for reducing motion-to-photon latency in a head-mounted display system (100, 200, 300), the head-mounted display system having at least one display for displaying an image, a tracking system (206) for tracking motion of a head, the method comprising:
(a) obtaining a first pose data from the tracking system at a first moment of time;
(b) forming a first pose forecast (F1) for a predicted time of displaying the image, wherein the predicted time is a predetermined time after the first moment of time;
(c) creating a first initial image based on the formed first pose forecast (F1);
(d) obtaining a second pose data from the tracking system at a second moment of time, which the second moment of time is after the first moment of time and before the predicted time;
(e) forming a second pose forecast (F2) for the predicted time of displaying the image;
(f) performing a first rapid image transformation for the first initial image based on a first pose difference forecast (DF1) to obtain a second initial image, wherein the first pose difference forecast (DF1) is determined by differences between the first pose forecast (F1) and the second pose forecast (F2);
(g) providing the second initial image for further processing, the further processing comprising:
(h) obtaining a third pose data from the tracking system at a third moment of time, wherein the third moment of time is after the second moment of time and before the predicted time; and
(i) forming a third pose forecast (F3) for the predicted time of displaying the image; and
(j) updating the second initial image by performing a second rapid image transformation for the second initial image based on a second pose difference forecast (DF2), which the second pose difference forecast (DF2) is determined by differences between the second pose forecast (F2) and the third pose forecast (F3).

2. A method (600) according to claim 1, wherein the method further comprises waiting for a next V-sync pulse after the third moment of time and providing the second initial image data to the at least one display when the next V-sync pulse is available.

3. A method (600) according to any of the preceding claims, wherein the method further comprises:
- obtaining a fourth pose data from the tracking system (206) at a fourth moment of time, wherein the fourth moment of time is after the third moment of time and before the predicted time;
- forming a fourth pose forecast (F4) for the predicted time of displaying the second initial image and
- performing line by line image adjustments to the second initial image comparing the fourth pose forecast with the third pose forecast during driving the at least one display to display the adjusted image lines.

4. A method (600) according to any of the preceding claims, wherein steps (b) to (f) are executed in a remote rendering unit and steps (i) to (j) are executed in the head-mounted display system (100, 200, 300).

5. A method (600) according to any of the preceding claims, wherein a predetermined time after the first moment of time is defined by measuring latency between communication between the head-mounted display system (100, 200 and 300) and the remote rendering unit (104).

6. A method (600) according to any of the preceding claims, wherein the at least one display (204) is a display of a multifocal display arrangement.

7. A head-mounted display system (100, 200 and 300) for reducing motion-to-photon latency, the head-mounted display system comprising:
- a head-mounted display apparatus (102) comprising:
a display driver (202) to drive an image on a display (204);
a tracking system (206) to obtain a pose data;
a communication interface (106) to form communication between the head-mounted display apparatus and a remote rendering unit (104); and
a processor (208) configured to
- collect a first pose data at a first moment of time and a second pose data at a second moment of time and provide the collected pose data via communication interface to the remote rendering unit;
- collect a third pose data at a third moment of time;
- receive a second initial image from a remote rendering unit via the communication interface;
- use the third pose data to form a second first initial image from the first initial image via a first rapid image transformation; and
- receive V-sync signal from the display driver and provide the second initial image to the display driver after receiving the V-sync signal.

8. A head-mounted display (100, 200 and 300) according to claim 7, where in the display processor (208) is further configured to collect a fourth pose data at a fourth moment of time and to perform line by line corrections to the provided second initial image during driving using the fourth pose data.

9. A head-mounted display system (100, 200 and 300) according to claim 7 or 8, wherein the head-mounted display apparatus (102) is a multifocal display apparatus.

10. A method (700) for reducing motion-to-photon latency in a system (100, 200 and 300) comprising a head-mounted display apparatus and a remote rendering unit (104) communicatively coupled with the head-mounted display apparatus (102) when in use, the method comprising:
- obtaining, by the remote rendering unit, a first set of pose data from a tracking system (206) for tracking motion of a head;
- using the first set of pose data to form an initial image to be provided to the head-mounted display apparatus;
- providing the initial image from the remote rendering unit to the head-mounted display apparatus;
- obtaining, by the head-mounted display apparatus, a second set of pose data from a tracking system for tracking motion of the head;
- using the second set of pose data to form a drivable image;
- using display driver (202) to drive the drivable image on a display (204); and
- updating, line by line the image to be driven by using the second set of pose data.

11. A method (700) according to claim 10, wherein the method further comprises determining duration of time it takes to transfer the initial image between the remote rendering unit (104) and the head-mounted display apparatus (102).

12. A method (700) according to claims 11, wherein the determined duration is used when forming the initial image.
